(19) Europäisches Patentamt
European Patent Office
Office européen des brevets

(11) **EP 2 432 815 B1**

(12) **EUROPÄISCHE PATENTSCHRIFT**

(45) Veröffentlichungstag und Bekanntmachung des Hinweises auf die Patenterteilung:
**23.10.2013 Patentblatt 2013/43**

(21) Anmeldenummer: **10723038.5**

(22) Anmeldetag: **19.05.2010**

(51) Int Cl.:
*C08G 18/32* (2006.01)      *C08G 18/48* (2006.01)
*C08G 18/50* (2006.01)      *C09D 175/02* (2006.01)
*C08G 18/10* (2006.01)

(86) Internationale Anmeldenummer:
**PCT/EP2010/056880**

(87) Internationale Veröffentlichungsnummer:
**WO 2010/133630 (25.11.2010 Gazette 2010/47)**

(54) **POLYHARNSTOFFE HERSTELLBAR AUS ZWEI POLYETHERAMINEN UND EINEM PREPOLYMER**

POLYUREA WHICH CAN BE PRODUCED FROM TWO POLYETHERAMINES AND A PREPOLYMER

POLYURÉES POUVANT ÊTRE PRODUITES À PARTIR DE DEUX POLYÉTHERAMINES ET D'UN PRÉPOLYMÈRE

(84) Benannte Vertragsstaaten:
**AL AT BE BG CH CY CZ DE DK EE ES FI FR GB GR HR HU IE IS IT LI LT LU LV MC MK MT NL NO PL PT RO SE SI SK SM TR**

(30) Priorität: **19.05.2009 EP 09160676**

(43) Veröffentlichungstag der Anmeldung:
**28.03.2012 Patentblatt 2012/13**

(73) Patentinhaber: **BASF SE**
**67056 Ludwigshafen (DE)**

(72) Erfinder:
• ELING, Berend
  **49448 Lemförde (DE)**
• GÖTTKE, Stephan
  **69117 Heidelberg (DE)**
• BUYLINCKX, Ben
  **NL-5087 Diessen (NL)**
• MÄGERLEIN, Wolfgang
  **68165 Mannheim (DE)**

(56) Entgegenhaltungen:
**EP-A1- 1 369 444      EP-A2- 0 348 760**
**EP-A2- 0 517 466      US-B2- 6 797 798**

**Beschreibung**

Die Erfindung betrifft Polyharnstoffe, die herstellbar sind durch Umsetzung einer Komponente A mit einer Komponente B. Die Komponente A umfasst zwei Polyetheramine und einen Amin-Kettenverlängerer, die Komponente B ist ein Prepolymer, das erhältlich ist aus einem Polyetherpolyol und einen Isocyanat. Vorzugsweise werden die erfindungsgemäßen Polyharnstoffe als Sprühformulierung hergestellt.

DE- A 41 17 679 betrifft Verfahren zur Herstellung von Polyurethan/ Polyharnstoff- Elastomeren oder Polyharnstoff- Elastomeren durch Spritzen oder Reaktionsspritzgießen einer Reaktionsmischung mit einer A- Seite und einer B- Seite. Dabei wird als A- Seite ein Polyisocyanat oder ein Polyurethan- Prepolymer mit Isocyanat- Abschluss eingesetzt. Als B- Seite wird ein Polyol oder ein Polyamin und ein Kettenverlängerer eingesetzt. Das Polyol wird hergestellt unter Verwendung eines Doppelmetallcyanid- Komplex- Katalysators (DMC- Katalysator) . Das Polyamin wird wiederum hergestellt durch Pfropfen des Polyols mit einem Amin. Sofern in der A- Seite ein Polyurethan- Prepolymer eingesetzt wird, sind dies Prepolymere basierend auf der Reaktion von Diphenylmethandiisocyanat (MDI) mit Diolen, Triolen oder hochmolekularen Polyolen.

US- B 6, 797, 798 offenbart ein Sprüh- Polyharnstoffelastomer umfassend das Reaktionsprodukt aus einer quasi- Prepolymer- Mischungszusammensetzung (Komponente A) und einer zweiten organischen Verbindung, die mit Isocyanat reagieren kann (Verbindung B) . Die Verbindung A umfasst dabei ein Zwischen- Prepolymer umfassend ein Reaktionsprodukt aus einer ersten Isocyanatzusammensetzung und einer ersten organischen Verbindung, die mit Isocyanat reagieren kann. Weiterhin umfasst die Komponente A) eine zweite Isocyanatzusammensetzung. Zur Herstellung des in Komponente A) enthaltenen Zwischen- Prepolymers können u.a. Polyole verwendet werden, insbesondere Polyetherdiole oder- triole mit einem mittleren Molekulargewicht von ca. 1000 bis 10 000. Als Komponente B) eignen sich beispielsweise Aminharze, die Amin- terminierte Polyoxypropylendiamine mit einem mittleren Molekulargewicht von 2000 bis 5000 enthalten (beispielsweise das Handelsprodukt JEFFAMINE D- 2000) oder aber auch Kettenverlängerer wie das Handelsprodukt ETHACURE 100. In US- B 6, 797, 798 sind jedoch keine Informationen enthalten, mit welchem Katalysator die Polyole bzw. Polyetherpolyole hergestellt werden.

US- A 5, 962, 618 offenbart weitere Sprüh- Polyharnstoffelastomere, die aus Aminharzen des JEFFAMINE- Typs hergestellt werden können. Diese Polyharnstoffe umfassen ein Reaktionsprodukt aus einem quasi- Prepolymer, das aus einem Isocyanat und einem aktiven Wasserstoff enthaltenen Material gebildet wird, einem Aminharz, einem Kettenverlängerer, Wasser und einem funktionellen Alkoxysilan.

Die in US-A 5,124,426 beschriebenen Sprüh-Polyharnstoffelastomere umfassen als Komponente A ein Isocyanat und als Komponente B ein Amin-terminiertes Polyoxyalkylenpolyol sowie einen Kettenverlängerer. Die Komponente A kann wiederum als quasi-Prepolymer ausgebildet sein, wobei das Isocyanat mit einem Polyol reagiert. Die zur Herstellung der Komponenten A und B eingesetzten Polyole können auch die vorstehend beschriebenen Aminharze des JEFFAMINE-Typs umfassen.

Das Dokument EP 0 348 760 A2 offenbart einen Polyharnstoff. Im Beispiel 1 wird die Herstellung dieses Polyharnstoffs beschrieben: Die A-Komponente besteht aus der Abmischung von:

- 70,5 Gew.-Teilen eines trifunktionellen Aminopolyethers der NH-Zahl 34 mit primären Aminogruppen (Jeffamine T 5000 der Firma Texaco),
- 5,0 Gew.-Teilen eines trifunktionellen Aminopolyethers der NH-Zahl 387 mit primären Aminogruppen (Jeffamine T 403 der Firma Texaco),
- 5,0 Gew.-Teilen Schwarzpaste N (Bayer AG),
- 15, 0 Gew.- Teilen 4, 4'- Diamino- 3, 3'- dimethyl- dicyclohexylmethan,
- 1, 0 Gew.- Teilen eines Lichtschutzmittels (TM Tinuvin 765 der Firma Ciba- Geigy),
- 2, 0 Gew.- Teilen Phenyl- di- (decylphenyl)- phosphit,

und die B- Komponente ist ein Semiprepolymer hergestellt aus 1- Isocyanato- 3, 3, 5- trimethyl- 5- isocyanatomethyl-cyclohexan und einem Polyethertriol der OH- Zahl 29, hergestellt durch Propoxylierung von Trimethylolpropan. Das NCO- Semiprepolymer weist einen NCO- Gehalt von 30 % auf.

Einen Überblick über die unterschiedlichen Arten von Polyharnstoffen sowie deren Verwendung findet sich in dem Artikel von B. Eling ("Coatings", The Polyurethanes Book; D. Randall, S. Lee (Editors), John Wiley & Sons (2002), Seiten 363 bis 378). Die bei der Polyharnstoff-Herstellung einsetzbaren Polyole bzw. Polyetherpolyole werden beispielsweise im Artikel von D. Sparrow ("Polyols"; The Polyurethanes Book; D. Randall, S. Lee (Editors), John Wiley & Sons (2002), Seiten 89 bis 112) beschrieben. Eine Übersicht zum Herstellungsverfahren von Sprüh-Polyharnstoffen kann dem Artikel von D. J. Primeaux II (Proceedings of the SPI, 32nd Annual Technical/Marketing Conference, San Francisco, Calilfornia (Oktober 1-4, 1989), Seiten 126 bis 130) entnommen werden.

Im Stand der Technik ist somit nirgendwo offenbart, dass zur Herstellung von Polyharnstoffen in einer der beiden Komponenten Gemische aus Polyetheraminen eingesetzt werden können, die sich hinsichtlich des Äquivalentgewichtes des eingesetzten Polyetherpolyols unterscheiden.

Der vorliegenden Erfindung liegt die Aufgabe zugrunde, weitere Polyharnstoffe bereitzustellen, die über eine Sprühformulierung hergestellt werden können. Die neuen Polyharnstoffe sollen gegenüber denjenigen aus dem Stand der Technik über verbesserte mechanische Eigenschaften verfügen und/oder auf wirtschaftlich einfache Weise (Kostenreduktion) herstellbar sein.

Die Aufgabe wird gelöst durch Polyharnstoffe herstellbar aus

a) einer Komponente A umfassend

a1) 5 bis 40 Gew.-% von mindestens einem Polyetheramin 1 (PEA 1), erhältlich aus mindestens einem Polyetherpolyol 1 (PEP 1) und mindestens einem Amin 1, wobei PEP 1 ein Äquivalentgewicht ≤ 500 aufweist und PEA 1 eine nominale Funktionalität von 2 hat,
a2) 30 bis 90 Gew.-% von mindestens einem Polyetheramin 2 (PEA 2), erhältlich aus mindestens einem Polyetherpolyol 2 (PEP 2) und mindestens einem Amin 2, wobei PEP 2 ein Äquivalentgewicht von > 500 aufweist und PEA 2 eine nominale Funktionalität von 2 hat,
a3) 5 bis 30 Gew.-% von mindestens einem Amin-Kettenverlängerer und
b) einer Komponente B, die ein Prepolymer ist, erhältlich aus
b1) mindestens einem Polyetherpolyol (PEP 3), wobei PEP 3 ein Äquivalentgewicht > 500 aufweist und eine nominale Funktionalität von 2 hat, und
b2) mindestens einem Isocyanat.

Die erfindungsgemäßen Polyharnstoffe haben den Vorteil, dass die A-Komponente eine vergleichsweise niedrige Viskosität aufweist und die Polyharnstoffe, insbesondere die Polyharnstoff-Sprühelastomere, über verbesserte mechanische Eigenschaften verfügen, beispielsweise hinsichtlich ihres Abriebs, ihrer Zugfestigkeit, ihrer Reißdehnung und/oder ihrem Weiterreißwiderstand. Weiterhin lassen sie sich sehr kostengünstig herstellen.

Bei der Herstellung von Polyharnstoff-Sprühelastomeren ist es vorteilhaft, wenn die Viskosität der A-Komponente so niedrig wie möglich ist, um eine gute Vermischung der A- und B-Komponente zu gewährleisten. Darüber hinaus haben die reaktiven Komponenten in der A- und B-Komponente bzw. die eingesetzten Polyetherpolyole eine nominale Funktionalität von 2. Die nominale Funktionalität eines Polyetherpolyols oder eines daraus hergestellten Polyetheramins wird durch die Funktionalität des Startermoleküls (Initiator) festgelegt bzw. bestimmt, das bei der jeweiligen Synthese des Polyetherpolyols eingesetzt worden ist. Auf diese Weise können erfindungsgemäß weitgehend lineare Polyharnstoff-Polymere hergestellt werden, wenn die Funktionalität der beiden Komponenten a1) und a2) sowie b) 2 beträgt.

Bei der Herstellung von Polyetherpolyolen, beispielsweise Polypropylenglykolen, mittels KOH Katalyse werden zudem Ungesättigtheiten (beispielsweise terminal-ungesättigte Verbindungen (Monoole) wie Allylalkohol als Nebenprodukte bei der Polymerisation) gebildet. Bei der Herstellung von Polypropylenglykolen mit einem Equivalentgewicht kleiner als 500 ist die Menge der Ungesättigtheiten vernachlässigbar klein, bei höheren Molekulargewichtspolyolen werden jedoch signifikante Mengen von Ungesättigtheiten gebildet. Diese Ungesättigtheiten weisen eine Hydroxylgruppe pro Molekül auf (Funktionalität von 1). Obwohl die nominale Funktionalität der Moleküle je nach eingesetztem Startermolekül 2, 3 oder 4 beträgt, ist die wirkliche (Number average) Funktionalität bedeutend, die aufgrund der bei der Polymerisation gebildeten Nebenprodukte (Ungesättigtheiten) bei Polymeren gemäß dem Stand der Technik (deutlich) kleiner als die nominale Funktionalität ist. In der Aminierungsreaktion der Polypropylenglykole werden auch die Ungesättigtheiten aminiert. Dementsprechend haben auch die Polyetheramine eine wirkliche (reale) Funktionalität kleiner als nominale Funktionalität. Im Gegensatz dazu ist der Gehalt an Ungesättigtheiten (ungesättigte Monool-Nebenprodukte bei der Polymerisation) in den Polyetherpolyolen bzw. Polyetheraminen der vorliegenden Erfindung deutlich geringer. Folglich entspricht bei den Polyetherpolyolen bzw. Polyetheraminen der vorliegenden Erfindung die wirkliche Funktionalität der nominalen Funktionalität.

In linear aufgebauten Polyharnstoffsystemen haben jedoch bereits geringe Mengen von Molekülen mit einer reaktiven Gruppe eine starke Reduktion des Molekulargewichts des Polymers zur Folge. Infolge dessen werden die Eigenschaften durch Anwesenheit von solchen monofunktionellen Verbindungen verschlechtert.

Um jedoch ein größeres Molekulargewicht des Polymers zu erreichen, werden im Stand der Technik normalerweise Polyetheramine eingesetzt, wie zum Beispiel Polyetheramin T5000 mit einer nominalen Funktionalität von 3. Nachteil der Zugabe des Triamins ist, dass die Viskosität der A-Komponente dadurch deutlich steigt.

Zu der Herstellung der Polypropylenglykole können andererseits auch DMC-Katalysatoren verwendet werden. Die mittels DMC-Katalyse hergestellten Polypropylenglykole enthalten generell sehr geringe Mengen an Ungesättigtheiten. Dementsprechend ist für diese Propylenglykole die wirkliche Funktionalität praktisch gleich der nominalen Funktionalität. Es ist bekannt, dass die Menge des eingesetzten Katalysators abhängig ist von dem Molekulargewicht des hergestellten Polyols. In der Herstellung von Hochmolekulargewichtspolyolen braucht man nur geringe Katalysatormengen im zweistelligen ppm Bereich, für die Herstellung von Polypropylenglykolen mit einem Equivalentgewicht kleiner als 500 braucht man dermaßen hohe Mengen an Katalysator, dass die Herstellung solcher Polyole mittels DMC-Katalyse wirtschaftlich uninteressant wird.

Die erfindungsgemäßen Polyharnstoffe haben somit den Vorteil, dass die A-Komponente eine niedrige Viskosität aufweist und bei der Reaktion der A-Komponente mit der B-Komponente Polyharnstoffe mit hohem Molekulargewicht und guten Eigenschaften gebildet werden.

Im Rahmen der vorliegenden Erfindung gelten folgende Begriffsdefinitionen:

Hydroxylwert (OH- Wert) : ein Maß für die Konzentration der Hydroxylgruppen (OH- Gruppen) in einem Polyol (Polyetherpolyol), ausgedrückt als mg des KOH- Äquivalents zu den Hydroxylgruppen in einem Gramm des entsprechenden Polyols. Der OH- Wert wird über die gängige Methode DIN 53240 bestimmt. Einheit: mgKOH/g

Äquivalentgewicht: entspricht der Zahl 56100 dividiert durch den OH-Wert.

Molekulargewicht: nominale Funktionalität multipliziert mit dem Äquivalentgewicht.

Isocyanatindex: benutzte Menge Isocyanat dividiert durch die theoretische Menge Isocyanat, multipliziert mit 100.

Ungesättigtheitszahl: ein Maß für die Konzentration von ungesättigten Endgruppen (beispielsweise Allyl) in einem Polyol (Polyetherpolyol), ausgedrückt als milli- Äquivalente der ungesättigten Spezies in einem Gramm des Polyols. Einheit: meq/g

Gesamt-Acetylierbarkeit: ein Maß für die Konzentration an reaktiven Gruppen (-OH, - NH-, -NH$_2$), ausgedrückt in mg eines KOH-Äquivalents zu den reaktiven Gruppen in einem Gramm eines Polyetheramins. Einheit: mgKOH/g

Gesamt-Aminwert (Aminzahl): ein Maß für die Konzentration von Aminogruppen (tertiär, sekundär und primär) ausgedrückt als mg eines KOH-Äquivalents zu den reaktiven Gruppen in einem Gramm eines Polyetheramins. Einheit: mgKOH/g

Aminierungsgrad: [Gesamt-Acetylierbarkeit/Gesamt-Aminwert] x 100 %

nominale Funktionalität: entspricht der Funktionalität des Startermoleküls (Initiator)

Nachfolgend werden die erfindungsgemäßen Polyharnstoffe, herstellbar aus einer Komponente A und einer Komponente B, näher beschrieben. Vorzugsweise wird der erfindungsgemäße Polyharnstoff hergestellt, indem eine Komponente A mit einer Komponente B umgesetzt wird. Gegebenenfalls können aber auch zwei oder mehrere unterschiedliche Komponenten A und/oder zwei oder mehrere unterschiedliche Komponenten B eingesetzt werden. Im erfindungsgemäßen Polyharnstoff beträgt das Volumenverhältnis von Komponente A zu Komponente B normalerweise 1 : 1 bis 1,5, vorzugsweise 1 : 1 bis 1,2 und insbesondere 1 : 1. Gegebenenfalls kann die Komponente B auch im Unterschuss eingesetzt werden.

Der Isocyanat-Index des Systems (Polyharnstoff) beträgt 80 bis 150, bevorzugt 90 bis 130, weiter bevorzugt 95 bis 115.

Die Komponente A umfasst 5 bis 40 Gew.-% einer Komponente a1), 30 bis 90 Gew.-% einer Komponente a2) und 5 bis 30 Gew.-% einer Komponente a3). Gegebenenfalls können in der Komponente A noch weitere Komponenten enthalten sein.

Die Komponente a1) ist mindestens ein Polyetheramin 1 (PEA 1) erhältlich aus mindestens einem Polyetherpolyol 1 (PEP 1) und mindestens einem Amin 1, wobei PEP 1 ein Äquiva-lentgewicht ≤ 500 aufweist.

PEA 1 wird nach dem Fachmann bekannten Methoden hergestellt, wobei PEP 1 und das Amin 1 bei erhöhter Temperatur und/oder Druck in Gegenwart eines Übergangsmetallkatalysators und gegebenenfalls Wasserstoff umgesetzt werden. Die Umsetzung kann batchweise, aber auch kontinuierlich erfolgen. Als Übergangsmetallkatalysator kann beispiels weise ein Kupfer- oder Nickel-haltiger Katalysator eingesetzt werden. Als Amin 1 eignet sich prinzipiell jedes dem Fachmann bekannte Amin inklusive Ammoniak, wobei das Amin ein primäres oder gegebenfalls ein sekundäres Amin sein kann. Vorzugsweise wird als Amin 1 Ammoniak eingesetzt. Kommerziell erhältlich ist ein Polyetheramin gemäß Komponente a1) beispielsweise unter dem Handelsnamen Polyetheramin D400 von der BASF SE (Ludwigshafen, Deutschland). Polyetheramin D400 hat eine nominale Funktionalität von 2 und ein Molekulargewicht von 400. PEA 1 hat normalerweise eine nominale Funktionalität von 2 bis 4, vorzugsweise von 2 bis 3, insbesondere von 2.

PEP 1 hat ein Äquivalentgewicht ≤ 500, vorzugsweise 50 bis 500, insbesondere 100 bis 400. PEP 1 wird vorzugsweise hergestellt unter Verwendung eines Alkalimetallhydroxid- Katalysators (MOH- Katalysator), insbesondere unter Verwendung eines Kaliumhydroxid- Katalysators (KOH- Katalysator) . PEP 1 hat eine nominale Funktionalität von 2. Die Auswahl der übrigen Verfahrensparameter für die Herstellung von PEA 2 kann jedoch unabhängig von den entsprechenden übrigen Verfahrensparameter für die Herstellung von PEA 1 erfolgen.

Die zur Herstellung von PEP 1 eingesetzten Edukte sind dem Fachmann ebenso wie die sonstigen Reaktionsbedingungen bekannt. Als Edukt eignen sich typischerweise Alkylenoxide oder eine Mischung von Alkylenoxiden. Dabei wird das Alkylenoxid mittels zufälliger oder schrittweiser Addition mit einem mehrere Hydroxylgruppen enthaltenen Initiator zu PEP 1 kondensiert. Geeignete Alkylenoxide sind Ethylenoxid, Propylenoxid, Butylenoxid, Amylenoxid oder Aralkylenoxide wie Styroloxid. Vorzugsweise wird als Alkylenoxid Propylenoxid oder eine Mischung davon mit bis zu 20 Gew.- % Ethylenoxid eingesetzt, insbesondere Propylenoxid. Geeignete Initiatoren (Starter bzw. Startermoleküle), die gegebenenfalls als Mischungen eingesetzt werden können, sind aliphatische Triole wie Glycerol, propoxylierte Glycerol- Addukte, Trimethylpropan, Triethylpropan oder Diole wie Ethylenglykol, 1-, 3- Propylenglykol oder Butylenglykol. Vorzugsweise ist PEP 1 ein Polyoxypropylen- Polyetherpolyol.

Der Einsatz von PEP 1 bringt Eigenschaftsvorteile. So werden Härte und Zähigkeit des erfindungsgemäßen Polyharnstoffs durch Zugabe von PEP 1 deutlich erhöht.

Die Komponente a2) ist mindestens ein Polyetheramin 2 (PEA 2) erhältlich aus mindestens einem Polyetherpolyol 2 (PEP 2) und mindestens einem Amin 2, wobei PEP 2 ein Äquivalentgewicht von > 500 aufweist.

PEA 2 unterscheidet sich von PEA 1 dahingehend, dass bei der Herstellung PEA 2 ein anderes Polyetherpolyol (PEP 2) eingesetzt wird als bei der entsprechenden Herstellung von PEA 1. Ansonsten entsprechen die übrigen Verfahrensparameter der Herstellung von PEA 2, wie verwendeter Katalysator oder Amin, denjenigen, die bei der Herstellung von PEA 1 eingesetzt wurden. Die Auswahl der übrigen Verfahrensparameter für die Herstellung von PEA 2 kann jedoch unabhängig von den übrigen Verfahrensparametern für die Herstellung von PEA 1 erfolgen. Dies gilt auch für die entsprechenden bevorzugten Angaben. So entspricht (beispielsweise) die Definition von Amin 2 derjenigen von Amin 1, vorzugsweise ist Amin 2 Ammoniak. PEA 2 hat eine nominale Funktionalität von 2.

PEP 1 und PEP 2 unterscheiden sich insbesondere hinsichtlich ihres Äquivalentgewichtes, das bei PEP 2 > 500 ist, vorzugsweise 550 bis 10 000, insbesondere 600 bis 5000. PEP 2 hat eine nominale Funktionalität von 2. Vorzugsweise ist PEP 2 ein Polyoxypropylen-Polyetherpolyol.

Die Herstellung von PEP 2 erfolgt nach dem Fachmann bekannten Methoden. Die zur Herstellung von PEP 2 eingesetzten Edukte samt der bevorzugten Angaben sowie der sonstigen Verfahrensparameter entsprechen denjenigen der Herstellung von PEP 1. Die Auswahl der sonstigen Verfahrensparameter für die Herstellung von PEP 2 kann jedoch unabhängig von den entsprechenden sonstigen Verfahrensparametern für die Herstellung von PEP 1 erfolgen. Dem Fachmann ist es prinzipiell bekannt, wie Polyetherpolyole von unterschiedlichem Äquivalentgewicht hergestellt werden können. Zwar können zur Herstellung von PEP 2 auch KOH- Katalysatoren eingesetzt werden, vorzugsweise werden zur Herstellung von PEP 2 jedoch Doppelmetall- Cyanid- Komplex- Katalysatoren (DMC- Katalysatoren) eingesetzt. Geeignete DMC- Katalysatoren sind dem Fachmann bekannt. Vorzugsweise wird ein Zinkhexacyanometallat- Katalysator eingesetzt.

Der Einsatz von PEP 2 bringt Eigenschaftsvorteile. So werden die Elastizität und Kälteflexibilität des erfindungsgemäßen Polyharnstoffs durch Zugabe von PEP 2 deutlich erhöht.

Die Komponente a3) ist mindestens ein Amin- Kettenverlängerer. Der Amin- Kettenverlängerer kann aromatisch oder aliphatisch sein. Ein kommerziell erhältlicher aliphatischer Amin- Kettenverlängerer ist beispielsweise vom Typ des Baxxodur PC 136. Aromatische Amin- Kettenverlängerer sind beispielsweise 3, 5- Diethyl- 2, 4- toluoldiamin, 3, 5- Diethyl- 2, 6- toluoldiamin, Isophorondiamin, Dimethylthiotoluoldiamin, t- Butyltoluoldiamin, 1- Methyl- 3, 5- diethyl- 2, 4- diaminobenzol, 1- Methyl- 3, 5- diethyl- 2, 6- diaminobenzol, 3, 5, 3', 5'- Tetraethyl- 4, 4'- diaminodiphenylmethan oder Kombinationen davon. Kommerziell erhältliche aromatische Amin- Kettenverlängerer sind beispielsweise solche des DEDTA- Typs (Diethylentoluoldiamin) wie Lonzacure DEDTA 80, ETHACURE 100, ETHACURE 300 oder Unilink 4200.

Die Komponente B ist ein Prepolymer und ist erhältlich aus den Komponenten b1) und b2). Gegebenenfalls können zur Herstellung der Komponente B noch weitere Komponenten verwendet werden. Die Komponente b1) ist mindestens ein Polyetherpolyol (PEP 3). Die Komponente b2) ist mindestens ein Isocyanat.

PEP 3 kann jedes beliebige Polyetherpolyol sein, beispielsweise kann PEP 3 die gleiche Verbindung sein wie PEP 1 oder PEP 2. PEP 3 hat eine nominale Funktionalität von 2. Vorzugsweise entspricht PEP 3 der vorstehend beschriebenen Definition von PEP 2 inklusive der jeweiligen bevorzugten Bedeutungen. Folglich ist PEP 3 vorzugsweise ebenfalls ein Polyoxypropylen-Polyetherpolyol oder wird unter Verwendung eines DMC-Katalysators hergestellt. Ebenso hat PEP 3 ein Äquivalentgewicht > 500, vorzugsweise 550 bis 10 000, insbesondere 600 bis 5000.

Als Isocyanat (Komponente b2) kann jedes beliebige, dem Fachmann bekannte Isocyanat eingesetzt werden. Geeignete Isocyanate sind beispielsweise in DE-A 10 2004 022 683 beschrieben. Die Isocyanate können aromatisch oder aliphatisch sein. Geeignete aromatische Isocyanate sind Diphenylmethandiisocyanat (MDI), Polymethylenpolyphenylisocyanat (PMDI), para-Phenylendiisocyanat, Naphthylendiisocyanat, flüssige Carbodiimidmodifiziertes MDI oder Toluoldiisocyanat (TDI). Besonders bevorzugt als Isocyanat ist MDI. Bevorzugte aliphatische Isocyanate sind Isophorondiisocyanat (IPDI) und Tetramethylxyloldiisocyanat (TMXDI). Vorzugsweise werden Mischungen aus 2,4' und 4,4'-MDI eingesetzt. Vorzugsweise beträgt der Anteil an 2,4'-MDI 2 bis 70 Gew.-%, insbesondere 30 bis 60 Gew.-%.

Die Komponente B hat normalerweise einen NCO-Wert von 10 bis 20.

Eine bevorzugte Ausführungsform der vorliegenden Erfindung betrifft einen Polyharnstoff herstellbar aus

   a) einer Komponente A umfassend

      a1) 5 bis 40 Gew.- % von mindestens einem Polyetheramin 1 (PEA 1), erhältlich aus mindestens einem Polyetherpolyol 1 (PEP 1) und mindestens einem Amin 1, wobei PEP 1 ein Äquivalentgewicht $\leq$ 500 aufweist und zur Herstellung von PEP 1 ein Alkalimetallhydroxid- Katalysator (MOH- Katalysator), insbesondere ein Kaliumhydroxid- Katalysator (KOH- Katalysator), eingesetzt wird,

      a2) 30 bis 90 Gew.- % von mindestens einem Polyetheramin 2 (PEA 2), erhältlich aus mindestens einem Polyetherpolyol 2 (PEP 2) und mindestens einem Amin 2, wobei PEP 2 ein Äquivalentgewicht von > 500 aufweist und zur Herstellung von PEP 2 ein Doppelmetall- Cyanid- Komplex- Katalysator (DMC- Katalysafor) eingesetzt wird,

      a3) 5 bis 30 Gew.-% von mindestens einem Amin-Kettenverlängerer  und

      b) einer Komponente B, die ein Prepolymer ist, erhältlich aus

      b1) mindestens einem Polyetherpolyol (PEP 3), wobei PEP 3 ein Äquivalentgewicht > 500 aufweist und zur Herstellung von PEP 3 ein DMC-Katalysator eingesetzt wird, und

      b2) mindestens einem Isocyanat.

Der erfindungsgemäße Polyharnstoff liegt vorzugsweise als Sprühformulierung vor. Der Polyharnstoff kann ein Elastomer und/oder ein Coating sein. Der erfindungsgemäße Polyharnstoff kann nach gängigen Herstellverfahren erzeugt werden, beispielsweise durch Spritzen, Reaktionsspritzgießen oder über ein Sprühformulierungsverfahren, vorzugsweise durch ein Sprühformulierungsverfahren.

Bei der Herstellung des erfindungsgemäßen Polyharnstoffs können neben den vorstehend beschriebenen Komponenten A und B noch weitere Komponenten enthalten sein. Diese weiteren Komponenten können der Komponente A und/oder der Komponente B vorab zugemischt oder beigefügt werden. Gegebenenfalls können die weiteren Komponenten auch direkt in das Polyharnstoff-Herstellungsverfahren eingebracht werden. Bei den weiteren Komponenten kann es sich entweder um eine einzelne Komponente oder ein Gemisch aus mehreren Komponenten handeln. Die weiteren Komponenten umfassen beispielsweise Treibmittel wie Wasser und/oder leicht flüchtige organische Substanzen, beispielsweise Pentan oder Chloroform, HCFC 141b, HFC-134a, HFC-245fa, HFC-365mfc oder Diethylether. Ebenso können Inertgase als Treibmittel eingesetzt werden. Neben Treibmittel können auch sonstige Zusatzstoffe wie Farbstoffe, Biozide, Weichmacher, Formtrennmittel, Füllstoffe, reaktive und nicht-reaktive Verdünner, Haftförderer, Füllstoffe oder Pigmente eingesetzt werden. Propylenkarbonat wird eingesetzt als Reaktivverdünner, Epoxysilane als Haftvermittler, Calciumcarbonat als Füllstoff, Titandioxid als Pigment.

Ein weiterer Gegenstand der vorliegenden Erfindung ist somit auch ein Verfahren zur Herstellung der erfindungsgemäßen Polyharnstoffe, in dem mindestens eine Komponente A mit mindestens einer Komponente B umgesetzt wird. Vorzugsweise handelt es sich dabei um ein Sprühformulierungsverfahren. Die Verfahren als solche sind dem Fachmann bekannt.

Die nachfolgenden Beispiele verdeutlichen die erfindungsgemäßen Polyharnstoffe sowie das Verfahren zu deren Herstellung. Soweit nicht anders angegeben, sind alle Anteile in Gewichtsprozent (Gew.-%) aufgeführt.

**Beispiele**

**Beispiel 1** Synthese von Polyetherpolyolen (Polyol 1 bis Polyol 3)

Polyol 1 (mittels KOH-Katalyse):

Die Synthese wird in einem gereinigten und getrockneten 10 Liter-Rührautoklaven durchgeführt. Es werden 0,525 kg Dipropylenglykol und 0,034 kg einer Lösung von 47,5 % wässrige KOH Lösung in den Rührkessel gegeben. Der Kesselinhalt wird mit Stickstoff inertisiert und insgesamt 1 Stunde bei 120 °C im Vakuum behandelt und getrocknet auf eine Wasserkonzentration von etwa 0,02 %. Anschließend werden über 4 Stunden 6,167 kg an Propylenoxid dosiert. Nach Abschluss der Dosierung wird nachgerührt bis zur Druckkonstanz und danach die Reaktionsmischung bei 105 °C und 10 mbar entgast. Das resultierende Produkt hatte einen OH-Wert von 59 mg KOH/g und wird vor der weiteren Verwendung mit 500 ppm Irganox 1135 als Antioxidans versetzt. Die Ungesättigtheitszahl von Polyol 1 beträgt 0,048 meq/g, das Äquivalentgewicht ist 950.

Polyol 2 (mittels DMC-Katalyse):

Die Synthese wird in einem gereinigten und getrockneten 10 Liter-Rührautoklaven durchgeführt gemäß Beispiel 1 aus DE 10 2004 047 406. Es werden 1,833 kg an Starterverbindung in den Rührkessel gegeben und mit 125 ppm einer Multimetallcyanidverbindung, hergestellt aus Zinkacetat und Hexacyanocobaltsäure, im Beisein eines oberflächenaktiven Mittels gemäß Beispiel 1 der EP 0 862 947, versetzt. Die Starterverbindung ist ein difunktionelles Propylenglykol-Propoxylat mit einem OH-Wert von 240 mg KOH/g, hergestellt durch KOH-Katalyse mit nachfolgender Entfernung des basischen Katalysators.

Der Kesselinhalt wird mit Stickstoff inertisiert und insgesamt 1 Stunde bei 120°C im Vakuum behandelt. Bei 120°C werden über 4 Stunden 6,167 kg an Propylenoxid dosiert. Nach Abschluss der Dosierung wird nachgerührt bis zur Druckkonstanz und danach die Reaktionsmischung bei 105°C und 10 mbar entgast. Das resultierende Produkt hat einen OH-Wert von 55 mg KOH/g und wird vor der weiteren Verwendung mit 500 ppm Irganox 1135 als Antioxidans versetzt. Die Ungesättigtheitszahl von Polyol 2 beträgt 0,003 meq/g, das Äquivalentgewicht ist 1020.

Polyol 3 (mittels KOH-Katalyse):

Die Synthese wird in einem gereinigten und getrockneten 10 Liter-Rührautoklaven durchgeführt. Es werden 2,56 kg Dipropylenglykol und 0,034 kg einer Lösung einer 47,5 % wässrigen KOH-Lösung in den Rührkessel gegeben. Der Kesselinhalt wird mit Stickstoff inertisiert und insgesamt 1 Stunde bei 120°C im Vakuum behandelt und getrocknet auf eine Wasserkonzentration von etwa 0,02 %. Anschließend werden über 4 Stunden 5,344 kg an Propylenoxid dosiert. Nach Abschluss der Dosierung wird nachgerührt bis zur Druckkonstanz und danach die Reaktionsmischung bei 105°C und 10 mbar entgast. Das resultierende Produkt hat einen OH-Wert von 278 mg KOH/g und wird vor der weiteren Verwendung mit 500 ppm Irganox 1135 als Antioxidans versetzt. Die Ungesättigtheitszahl von Polyol 3 beträgt 0,004 meq/g, das Äquivalentgewicht ist 200.

**Beispiel 2** Synthese von Polyetheraminen (PPDA1 bis PPDA3)

Im vorliegenden Beispiel werden Polyoxypropylendiamine mit endständiger primärer Aminfunktionen hergestellt. Die Polyetheramine werden in einem Verfahren hergestellt, in dem das zugrundeliegende Polyoxypropylen-Polyetherpolyol gemäß Beispiel 1 Ammoniak und Wasserstoff bei höherer Temperatur und höherem Druck in Gegenwart eines Übergangsmetall-Katalysators ausgesetzt wird. Dieser Aminierungsschritt liefert hauptsächlich primäre Aminfunktionen, der Gehalt an sekundären und tertiären Aminen ist dabei weniger als 1 % basierend auf dem Amingehalt.

Ein kontinuierlich betriebener Hochdruckfestbettreaktor wird mit 500 ml eines Ni/Co/ZrO$_2$ Katalysator befüllt, der wie in EP-A 0 696 529 beschrieben hergestellt wird (Katalysator A). In den Reaktor werden 100 g pro h des entsprechenden Polyols sowie 210 g pro h flüssiger Ammoniak eingespeist. Die Katalysatortemperatur wird auf 195 °C eingestellt und der Reaktor mit 120 bar Wasserstoff befüllt. Der Reaktorauslass wird nach Entspannung destilliert, um Ammoniak und Wasser zu entfernen.

Das Polyoxypropylen-Polyetherpolyol mit einer nominalen Funktionalität von 2 und einem OH-Wert von 59 mg KOH/g (Polyol 1 aus Beispiel 1 mit KOH-Katalysator) wird in ein Polyoxypropylendiamin mit endständiger primärer Aminfunktion überführt (PPDA1). Die Aminzahl des Destillationsrückstandes beträgt 57 mg KOH/g. Die Acetylierungszahl ist 61,5 mg KOH/g. Der Aminierungsgrad basierend auf dem Quotient von Aminzahl und Acetylierungszahl beträgt 92,7 %.

Das Polyoxypropylen-Polyetherpolyol mit einer nominellen Funktionalität von 2 und einem OH-Wert von 55 mg KOH/g (Polyol 2 aus Beispiel 1 mit DMC-Katalysator) wird in ein Polyoxypropylendiamin mit endständiger primärer Aminfunktion überführt (PPDA2). Die Aminzahl des Destillationsrückstandes beträgt 50,7 mg KOH/g. Die Acetylierungszahl ist 54,0 mg KOH/g. Der Aminierungsgrad basierend auf dem Quotient von Aminzahl und Acetylierungszahl beträgt 93,9 %.

Das Polyoxypropylen-Polyetherpolyol mit einer nominellen Funktionalität von 2 und einem OH-Wert von 278 mg KOH/g (Polyol 3 aus Beispiel 1 mit KOH-Katalysator) wird in ein Polyoxypropylendiamin mit endständiger primärer Aminfunktion überführt (PPDA3). Die Aminzahl des Destillationsrückstandes beträgt 247 mg KOH/g.

**Beispiel 3** Synthese von Prepolymeren gemäß Komponente B

Ein Prepolymer 1 wird hergestellt aus MDI und einem Polyoxypropylen-Polyetherpolyol. (Polyol 1 aus Beispiel 1). Das MDI enthält jeweils zu 50 Gew.-% das 2,4'-Isomere und das 4,4'-Isomere (51,0 Gew.-%). Polyol 1 hat eine nominale Funktionalität von 2 und einen OH-Wert von 59 mg KOH/g. Es wird in Gegenwart von KOH als Katalysator hergestellt (49 Gew.-%). Die Ungesättigtheitszahl von Polyol 1 beträgt 0,048 meq/g, das Äquivalentgewicht ist 950.

Prepolymer 2 wird entsprechend zu Prepolymer 1 hergestellt, wobei anstelle von Polyol 1 das Polyol 2 verwendet wird, das eine nominale Funktionalität von 2 und einen OH-Wert von 240 mg KOH/g aufweist, jedoch unter Verwendung eines DMC-Katalysators hergestellt wird und eine Ungesättigtheitszahl von 0,003 meq/g aufweist. Das Äquivalentgewicht ist 1020.

Die Prepolymere 1 und 2 werden nach Standardverfahren bei einer Batchtemperatur von 80 °C und einer Reaktionszeit von 2 Stunden hergestellt.

**Beispiel 4** Herstellung des Polyharnstoffs

Im nachfolgenden Beispiel wird als A-Komponente eine Basisformulierung mit folgender Komponente eingesetzt:

Polyetheramin 2: PPDA1 oder PPDA2, jeweils zu 63,1 Gew.-%

Polyetheramin 1: PPDA3 zu 17,05 Gew.-%

Amin-Kettenverlängerer: ETHACURE 100 zu 19,85 Gew.-%

ETHACURE 100 ist ein kommerziell erhältlicher Amin- Kettenverlängerer der Albemarle Corporation. Es enthält eine 80/20- Mischung von 3, 5- Diethyl- 2, 4- toluoldiamin und 3, 5- Diethyl- 2, 6- toluoldiamin. Die A- Komponente (unter Verwendung der vorstehenden Basisformulierung) wird mit der B- Komponente (eines der Prepolymere gemäß Beispiel 3) zu einer Polyharnstoff- Sprühformulierung (Elastomer) umgesetzt, wobei ein Mischungsverhältnis von A- Komponente zu B- Komponente von 100 zu 109 verwendet wird. Dabei wird arithmetisch ein Isocyanat-Index von 104 erzielt. Die verwendete Sprühausrüstung ist von der Fa. Graco (Graco Reaktor E- XP 2- dispensing unit), die mit einer Graco Fusion- Sprühpistole, Mo- dell AR 2929, ausgerüstet ist. Die Temperatur der eingesetzten Komponenten beträgt 75 °C, der Druck beläuft sich auf 160 bis 170 bar. Der so hergestellte Polyharnstoff wird auf eine Plastikplatte (Paneel) gesprüht, die mit einem Formentrenner beschichtet ist. Die Po- lyharnstoff- Coatings werden von der Plastikplatte durch vorsichtiges Ziehen einer Ecke des Coatings entfernt. Auf diese Weise werden die nachfolgenden Polyharnstoff- Coatings (A- D) hergestellt:

Tabelle 1

| A-Komponente | Polyharnstoff Coating A | Polyharnstoff Coating B | Polyharnstoff Coating C | Polyharnstoff Coating D |
|---|---|---|---|---|
| PPDA1 | 63,1 | 63,1 | | |
| PPDA2 | | | 63,1 | 63,1 |
| PPDA3 | 17,05 | 17,05 | 17,05 | 17,05 |
| Ethacure 100 | 19,85 | 19,85 | 19,85 | 19,85 |
| | | | | |
| **B-Komponente** | | | | |
| Prepolymer 1 | 109 | | | 109 |
| Prepolymer 2 | | 109 | 109 | |

Die mechanischen Eigenschaften dieser Polyharnstoff-Coatings werden gemessen, nachdem die jeweiligen Proben für zwei Wochen bei Raumtemperatur und 50 % Feuchtigkeit gelagert werden (siehe Tabelle 2).

Tabelle 2

| | Polyharnstoff Coating A | Polyharnstoff Coating B | Polyharnstoff Coating C | Polyharnstoff Coating D |
|---|---|---|---|---|
| Dichte (g/cm$^3$) | 0,998 | 1,005 | 1,004 | 1,008 |
| Shore Härte A/D | 95/40 | 95/42 | 96/43 | 95/41 |

(fortgesetzt)

| | Polyharnstoff Coating A | Polyharnstoff Coating B | Polyharnstoff Coating C | Polyharnstoff Coating D |
|---|---|---|---|---|
| Zugfestigkeit | 22 | 23 | 27 | 26 |
| Reißdehnung (%) | 420 | 450 | 490 | 500 |
| Weiterreißwiderstand | 58 | 61 | 68 | 64 |
| Abriebwiderstand (DIN 4649, mm$^3$) | 173 | 158 | 134 | 144 |

**Patentansprüche**

1. Polyharnstoff herstellbar aus

   a) einer Komponente A umfassend

   a1) 5 bis 40 Gew.-% von mindestens einem Polyetheramin 1 (PEA 1), erhältlich aus mindestens einem Polyetherpolyol 1 (PEP 1) und mindestens einem Amin 1, wobei PEP 1 ein Äquivalentgewicht $\leq$ 500 aufweist und PEA 1 eine nominale Funktionalität von 2 hat,
   a2) 30 bis 90 Gew.-% von mindestens einem Polyetheramin 2 (PEA 2), erhältlich aus mindestens einem Polyetherpolyol 2 (PEP 2) und mindestens einem Amin 2, wobei PEP 2 ein Äquivalentgewicht von > 500 aufweist und PEA 2 eine nominale Funktionalität von 2 hat,
   a3) 5 bis 30 Gew.-% von mindestens einem Amin-Kettenverlängerer
   und

   b) einer Komponente B, die ein Prepolymer ist, erhältlich aus

   b1) mindestens einem Polyetherpolyol (PEP 3), wobei PEP 3 ein Äquivalentgewicht > 500 aufweist und eine nominale Funktionalität von 2 hat, und
   b2) mindestens einem Isocyanat.

2. Polyharnstoff gemäß Anspruch 1 , **dadurch gekennzeichnet, dass** der Polyharnstoff als Sprühformulierung vorliegt.

3. Polyharnstoff gemäß Anspruch 1 oder 2, **dadurch gekennzeichnet, dass** zur Herstellung von PEP 2 ein Doppelmetall- Cyanid- Komplex- Katalysator (DMC- Katalysator) eingesetzt wird.

4. Polyharnstoff gemäß einem der Ansprüche 1 bis 3, **dadurch gekennzeichnet, dass** zur Herstellung von PEP 3 ein DMC-Katalysator eingesetzt wird.

5. Polyharnstoff gemäß einem der Ansprüche 1 bis 4, **dadurch gekennzeichnet, dass** zur Herstellung von PEP 1 ein Alkalimetallhydroxid- Katalysator (MOH- Katalysator), insbesondere ein Kaliumhydroxid- Katalysator (KOH-Katalysator), eingesetzt wird.

6. Polyharnstoff gemäß einem der Ansprüche 1 bis 5, **dadurch gekennzeichnet, dass** das Amin 1 und/oder das Amin 2 Ammoniak sind.

7. Polyharnstoff gemäß einem der Ansprüche 1 bis 6, **dadurch gekennzeichnet, dass** PEP 1 , PEP 2 und/oder PEP 3 ein Polyoxypropylen-Polyetherpolyol sind.

8. Polyharnstoff gemäß einem der Ansprüche 1 bis 7, **dadurch gekennzeichnet, dass** das Isocyanat Diphenylmethandiisocyanat (MDI) ist.

9. Verfahren zur Herstellung eines Polyharnstoffs gemäß einem der Ansprüche 1 bis 8, **dadurch gekennzeichnet, dass** mindestens eine Komponente A mit mindestens einer Komponente B umgesetzt wird.

10. Verfahren gemäß Anspruch 9, **dadurch gekennzeichnet, dass** es sich um ein Sprühformulierungsverfahren handelt.

## Claims

1.  A polyurea preparable from

    a) a component A comprising

        a1) 5 to 40% by weight of at least one polyetheramine 1 (PEA 1), obtainable from at least one polyetherpolyol 1 (PEP 1) and at least one amine 1, where PEP 1 has an equivalent weight of $\leq$ 500 and PEA 1 has a nominal functionality of 2,
        a2) 30 to 90% by weight of at least one polyetheramine 2 (PEA 2), obtainable from at least one polyetherpolyol 2 (PEP 2) and at least one amine 2, where PEP 2 has an equivalent weight of > 500 and PEA 2 has a nominal functionality of 2,
        a3) 5 to 30% by weight of at least one amine chain extender

    and
    b) a component B, which is a prepolymer, obtainable from

        b1) at least one polyetherpolyol (PEP 3), where PEP 3 has an equivalent weight of > 500 and has a nominal functionality of 2, and
        b2) at least one isocyanate.

2.  The polyurea according to claim 1, wherein the polyurea is in the form of a spray formulation.

3.  The polyurea according to claim 1 or 2, wherein a double-metal-cyanide complex catalyst (DMC catalyst) is used for the preparation of PEP 2.

4.  The polyurea according to any one of claims 1 to 3, wherein a DMC catalyst is used for the preparation of PEP 3.

5.  The polyurea according to any one of claims 1 to 4, wherein an alkali metal hydroxide catalyst (MOH catalyst), in particular a potassium hydroxide catalyst (KOH catalyst), is used for the preparation of PEP 1.

6.  The polyurea according to any one of claims 1 to 5, wherein the amine 1 and/or the amine 2 are ammonia.

7.  The polyurea according to any one of claims 1 to 6, wherein PEP 1, PEP 2 and/or PEP 3 are a polyoxypropylene polyetherpolyol.

8.  The polyurea according to any one of claims 1 to 7, wherein the isocyanate is diphenylmethane diisocyanate (MDI).

9.  A process for the preparation of a polyurea according to any one of claims 1 to 8, wherein at least one component A is reacted with at least one component B.

10. The process according to claim 9, which is a spray-formulation process.


## Revendications

1.  Polyurée pouvant être préparée à partir de

    a) un composant A comprenant

        a1) 5 à 40% en poids d'au moins une polyétheramine 1 (PEA 1), pouvant être obtenue à partir d'au moins un polyétherpolyol 1 (PEP 1) et d'au moins une amine 1, PEP 1 présentant un poids équivalent $\leq$ 500 et PEA 1 présentant une fonctionnalité nominale de 2,
        a2) 30 à 90% en poids d'au moins une polyétheramine 2 (PEA 2), pouvant être obtenue à partir d'au moins un polyétherpolyol 2 (PEP 2) et d'au moins une amine 2, PEP 2 présentant un poids équivalent > 500 et PEA 2 présentant une fonctionnalité nominale de 2,
a3) 5 à 30% en poids d'au moins un agent d'allongement de chaîne d'amine et

b) un composant B, qui est un prépolymère, pouvant être obtenu à partir de

b1) au moins un polyétherpolyol (PEP 3), PEP 3 présentant un poids équivalent > 500 et une fonctionnalité nominale de 2, et
b2) au moins un isocyanate.

2. Polyurée selon la revendication 1, **caractérisée  en ce que** la polyurée se trouve sous forme de formulation à pulvériser.

3. Polyurée selon la revendication 1 ou 2, **caractérisée en ce que** pour la préparation de PEP 2, on utilise un catalyseur complexe de cyanure bimétallique (catalyseur DMC).

4. Polyurée selon l'une quelconque des revendications 1 à 3, **caractérisée en ce que** pour la préparation de PEP 3, on utilise un catalyseur DMC.

5. Polyurée selon l'une quelconque des revendications 1 à 4, **caractérisée en ce qu'**on utilise, pour la préparation de PEP 1, un catalyseur de type hydroxyde de métal alcalin (catalyseur MOH), en particulier un catalyseur de type hydroxyde de potassium (catalyseur KOH).

6. Polyurée selon l'une quelconque des revendications 1 à 5, **caractérisée en ce que** l'amine 1 et/ou l'amine 2 sont l'ammoniac.

7. Polyurée selon l'une quelconque des revendications 1 à 6, **caractérisée en ce que** PEP 1, PEP 2 et/ou PEP 3 sont un polyoxypropylène-polyétherpolyol.

8. Polyurée selon l'une quelconque des revendications 1 à 7, **caractérisée en ce que** l'isocyanate est le diphénylméthanediisocyanate (MDI).

9. Procédé pour la préparation d'une polyurée selon au moins l'une quelconque des revendications 1 à 8, **caractérisé en ce qu'**au moins un composant A est transformé avec au moins un composant B.

10. Procédé selon la revendication 9, **caractérisé en ce qu'**il s'agit d'un procédé par une formulation à pulvériser.

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 4117679 A
- US 6797798 B
- US 5962618 A
- US 5124426 A
- EP 0348760 A2
- DE 102004022683 A
- DE 102004047406
- EP 0862947 A
- EP 0696529 A

**In der Beschreibung aufgeführte Nicht-Patentliteratur**

- Coatings. **B. ELING.** The Polyurethanes Book. John Wiley & Sons, 2002, 363-378
- **D. J. PRIMEAUX II.** *Proceedings of the SPI, 32nd Annual Technical/Marketing Conference, San Francisco, Calilfornia,* 01. Oktober 1989, 126-130